Europäisches Patentamt

(19) European Patent Office

Office européen des brevets

(11) Publication number: **0 002 106**
**A1**

## (12) EUROPEAN PATENT APPLICATION

(21) Application number: 78300503.6

(22) Date of filing: 16.10.78

(51) Int. Cl.²: **B 65 G 13/00,** B 60 P 1/52, B 63 B 25/22, B 64 C 1/20, B 65 G 1/04

---

(30) Priority: 14.10.77 GB 42931/77

(71) Applicant: **Hydraroll Limited, St. Martin's House Bull Ring, Birmingham B5 5DT (GB)**

(72) Inventor: **Webb, John Edmund Richard, Trefnus Bodorgan, Isle of Angelsey North Wales (GB)**

(74) Representative: **Rowe, Eric Nielsen et al, c/o Edward Evans & Co. Chancery House 53-64 Chancery Lane, London WC2A 1SD (GB)**

(43) Date of publication of application: 30.05.79 Bulletin 79/11

(84) Designated Contracting States: BE CH DE FR GB LU NL SE

---

(54) Load handling apparatus with liftable rollers, and floor equipped therewith.

(57) Load handling apparatus comprising a support surface (23) for supporting a load, a body member (11) including a plurality of rotatable members (13) for moving a load over the support surface (23), means (20) for moving either the support surface (23) or the body member (11) between one position in which the rotatable members (13) are proud of the support surface (23) and a second position in which they are substantially flush with or recessed below the support surface (23) and means (14, 17, 18, 19) for propelling a load over the support surface (23) in the first position.

A floor equiped with such a load handling apparatus.

-1-

"Mechanical Handling Apparatus"

The invention relates to mechanical handling apparatus.

Mechanical handling apparatus is known which discloses a roller conveyor in which rollers are supported by inflatable devices so that when the devices are inflated the higher parts of the rollers stand above a support surface and render any goods on the rollers mobile, whereas when the devices are deflated the rollers are retracted wholly below the support surface, thus leaving the goods immobile on the surface (United Kingdom Patent No. 929 920).

In the prior art specificification it has been found that though goods are movable, it is difficult to manoeuvre them over the whole length of the apparatus, particularly when that apparatus is installed in a confined place.

The invention as claimed is intended to provide a remedy. It solves the problem of how to provide mechanical handling apparatus which is usable for manoeuvring loads over its whole length, thereby providing an efficient apparatus which can utilise substantially its whole area for handling and supporting loads.

-2-

The advantages offered by the invention are mainly that the mechanical handling apparatus, in having propelling means for propelling a load over the surface in the first position of the rotatable members, an operator of the apparatus does not physically have to push the goods over the surface, and that the goods can be manoeuvred over the whole of the surface of the apparatus from a remote position, by suitable control of the propelling means.

The propelling means may comprise a motor drive arrangement which can rotate the rotatable members directly. This provides a relatively simple construction.

Alternatively the propelling means may comprise an endless belt trained round the rotatable members and a motor drive arrangement for that belt. This provides a particularly advantageous yet simple arrangement in which the members and belt are combined into a single unit.

Again, the propelling means may comprise a separate endless belt and a motor drive arrangement therefor. The separate endless belt may be adjacent the rotatable members and associated with the support surface and mounted for movement between the one position and the second position.

The endless belt may comprise a strand of friction or non-friction material. The belt may comprise parallel linked slats of metal, wood or the like.

The belt may include along its length fingers or pushers which can engage a load for urging it in the direction of movement of the belt.

-3-

The drive arrangement may be reversible, so that the load can be moved in opposite directions over the support surface.

In a preferred embodiment the body is elongate and comprises a channel member supporting rotatable members, the means for moving comprising an inflatable device engaging the channel member for raising and lowering it relative to the support surface, which is fixed. The endless belt is also movable with the channel member.

Preferably there may be two channel members set into a floor of a load carrying vehicle, with the belt disposed between the channels and substantially parallel to them. The motor drive arrangement may be a mains driven motor. Alternatively the motor drive arrangement may be driven by the vehicle's own power supply system.

One way of carrying out the invention is described in detail below, with reference to drawings which show only one embodiment, in which:-

Figure 1 is a vertical sectional view of a device for use in mechanical handling apparatus in accordance with the invention;

Figure 2 is a vertical sectional view of propelling means of the device of Figure 1; and

Figure 3 is, to a smaller scale, a side elevational view of the device of Figure 2.

Referring to the drawings there is shown mechanical handling apparatus including a device 1 having a hollow elongate body member 2 in the form of a channel member 3 which houses an inflatable device in the form of an air bag assembly 4 which has connectors (not shown) for connecting it to an existing air supply of a vehicle for example.

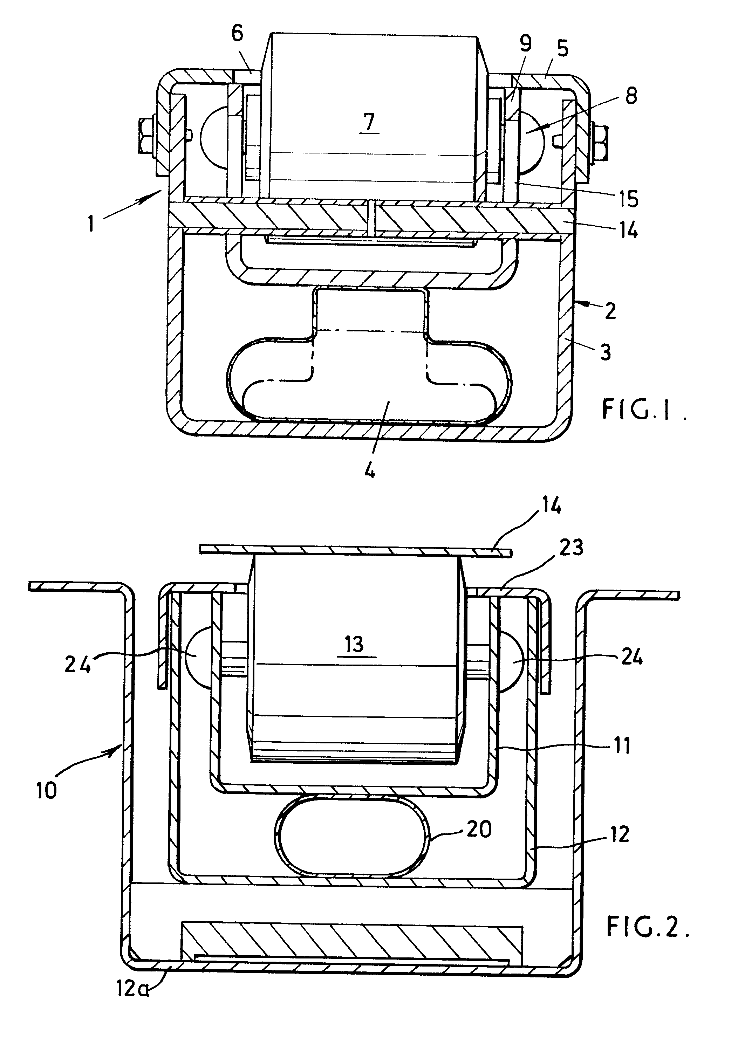

The open top of the channel member 3 is closed by a static support surface in the form of a top plate 5 (as viewed in Figure 1) which has a number of discrete openings 6. A roller 7 is aligned, in the vertical sense, with each opening 6. The rollers 7 are freely rotatable and are mounted by means 8 such as a shaft and retainer nuts in a mounting in the form of a channel shaped support 9 which is situated internally of the device and the underside of which is connected to the air bag assembly 4.

The clearance of the rollers 7 and their associated openings 6 is such that substantially no foreign bodies can enter the channel 9. Under the support 9 and above the air bag 4 there is a flat plate (not shown) covering the width of the inside of the track to protect the air bag from foreign bodies which might possibly enter into the inside section.

There is a longitudinally extending guide plate (not shown) secured to one side of the device and standing proud of the top plate 5.

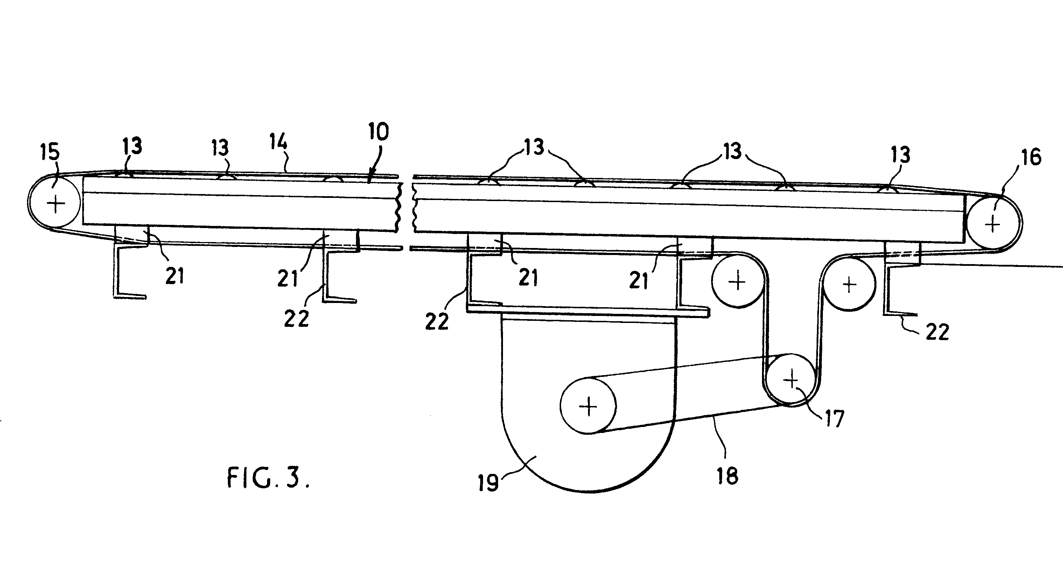

The mechanical handling apparatus includes a propelling means 10 (Figures 2 and 3). This means is similar to the elongate device 1 in that it has an elongate channel shaped body member 12 seating a channel member 11 supporting a plurality of rollers 13.

The member 12 is itself in a protective channel shaped enclosure or trunking 12a.

There is an endless friction conveyor belt 14 trained over the rollers 13, around end idler rollers 15, 16 and a drive roller 17 which is driven by a belt drive 18 of the toothed timing type from a motor 19 which is mains driven. The channel 11 is also raisable and lowerable by an air bag arrangement such as a hose 20 which extends the length of the propelling means 10 and is connectible by connectors to the existing air supply system of for example a vehicle in which the mechanical handling apparatus is mounted. Thus the propelling means 10 and two devices 1 may be mounted in substantially parallel alignment on support blocks 21 on the existing body cross-members 22 of for example, a 40' container lorry. In a preferred embodiment, the propelling means 10 would be between the two devices 1.

The two devices 1 and the propelling means 10 comprise the mechanical handling apparatus. Thus in use for handling loads or pallets in a 40' vehicle, one or more pairs of devices 1 and propelling means 10 are laid along the length of the vehicle at lateral spacings adequate to support the pallets. The devices 1 form tracks. The air bag assemblies 4 and 20 are connected up to the air supply of the vehicle, which is operated by a simple two way position valve for "on/off" operation.

There may be several devices 1 laid end to end in each track of a pair, depending on the length of the vehicle.

In order to handle and secure pallets, each air bag assembly 4, 20 is inflated (from the chain dotted to full line position in Figure 1) so that the support 9 and thus the rollers 7, and also the rollers 13 and the belt 14, are raised so that part of the boundary surface of the rollers 7 and the belt 14 protrude above the plane of the respective top plates 5 and 23. The rounded heads of the buts 8, 24 prevent canting of the supports 9, 11 during raising and lowering.

With the drive means 19 switched on a pallet is offered up to the container and placed on the rollers 7 and belt 14 and is propelled along the rollers 7 by the belt 14, which has frictional contact with the undersurface of the pallet. The drive means 19 is switched off when the pallet reaches the desired position in the container.

When the container is loaded, the rollers 7 and 13 and belt 14 are lowered or retracted so that the pallet is supported by the floor of the container. The belt 14 is retracted by an amount sufficient to maintain it in contact with the underside of the pallet so that the frictional engagement between them has a braking effect which helps to retain the pallet in position during transit of the container or on sloping or uneven ground.

Alternatively, if the belt has upstanding fingers, pushers, lugs or the like (not shown) at intervals sufficient to accommodate a standard pallet, these act as stops or brakes too.

The motor 14 may be driven by the mains _via_ connectors (not shown) or may be driven by the power supply of the vehicle. The motor 14 is reversible so that the belt 14 can be used to unload the container too.

The apparatus forming the track stays "live" during the whole loading operation. When all the pallets are loaded, the or each air bag assembly 4 and 20 can be deflated so that the rollers 7 retract below the plane of the top plate 5 and the track becomes "dead" with the legs of the pallets supported by the top plates 5.

The apparatus can take loads of up to 2 tons per pallet at a P.S.I. of 40lbs. The equipment is normally operated at 20 P.S.I.

It will be understood that the invention above described and shown in the drawings can be modified in various ways. For example, the conveyor belt 14 and its rollers 13 may be the sole raisable and lowerable means, so that the rollers 7 and the belt 14 are effectively combined into one unit. A suitable number of the propelling means 10 would then, as before, be set into the floor of a vehicle in parallel relationship for moving a load over the support surface of the vehicle.

It will also be understood that the mechanical handling apparatus may be installed in any location where loads are to be moved and stored, such as aeroplanes, ships, warehouses, factories, and the like.

In every embodiment, the conveyor belt 14 may comprise a plurality of interlinked chain links each having a surface layer of high grade rubber or synthetic rubber-like material.

-8-

CLAIMS:

1. Mechanical handling apparatus comprising a support surface for supporting a load, a body member including a plurality of rotatable members for moving a load over the support surface, means for moving either the support surface or the body member between one position in which the rotatable members are proud of the support surface and a second position in which they are substantially flush with or recessed below the support surface, characterised by means (10) for propelling a load over the support surface (5,23) in the first position.

2. Mechanical handling apparatus according to Claim 1, characterised in that the propelling means (10) comprises a drive (17,18,19) which directly rotates the rotatable members (7).

3. Mechanical handling apparatus according to Claim 1, characterised in that the propelling means (10) is a drive (17,18,19) which drives an endless belt (14) trained round the rotatable members (7).

4. Mechanical handling apparatus according to Claim 1, characterised by an endless belt (14) trained round rollers (13) and driven by a drive (17,18,19) of the propelling means (10), and by an inflatable means (20) for moving the propelling means (10) between the first and second positions.

-9-

5. Mechanical handling apparatus according to Claim 3 or Claim 4, characterised in that the belt (14) is a strand which has a surface of friction material.

6. Mechanical handling apparatus according to any of Claims 3 to 5, characterised in that the belt (14) has fingers or pushers along its length for engaging a load.

7. A floor or substrate for handling or storing a load, characterised by an inflatable device (1) having rollers (7) and an inflatable bag (4) by which the rollers are raisable to be proud of the surface and lowerable so as to be flush with or below the surface, and propelling means (10) comprising rollers (13) an endless belt (14) trained round the rollers (13) an inflatable bag (20) for raising and lowering the rollers (13) and belt (14), and means (17,18,19) for driving the belt (14).

0002106

FIG.1.

FIG.2.

FIG.3.

## European Patent Office

## EUROPEAN SEARCH REPORT

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | |
| X | DE - A - 2 525 434 (A. GREUL) <br> * page 5, lines 5 to 21 * <br> -- | 1,3,4, 7 | B 65 G 13/00 <br> B 60 P 1/52 <br> B 63 B 25/22 <br> B 64 C 1/20 <br> B 65 G 1/04 |
| X | GB - A - 912 499 (RAPIDS-STANDARD) <br> * page 3, lines 23 to 81 * <br> -- | 1,3 | |
| - | US - A - 2 932 380 (J.M. ALVEY. JR. et al) <br> * column 1, lines 14 to 65 * <br> -- | 4 | TECHNICAL FIELDS SEARCHED (Int.Cl.²) |
| - | US - A - 3 620 353 (MC DONNELL DOU-GLAS) <br> * column 1, lines 45 to 61; <br> column 2, lines 6 to 9 * <br> -- | 7 | B 60 P 1/36 <br> B 60 P 1/38 <br> B 60 P 1/52 <br> B 63 B 25/22 <br> B 64 C 1/20 <br> B 65 G 1/04 <br> B 65 G 13/00 <br> B 65 G 13/06 <br> B 65 G 13/11 <br> B 65 G 67/02 |
| D | GB - A - 929 920 (WELDED AND ALLIED PRODUCTS) <br> * page 1, line 9 to 37 * <br> -- | 1,4,7 | |
| A | DE - A - 2 426 073 (RAPISTAN) <br> -- | | CATEGORY OF CITED DOCUMENTS |
| A | DE - U - 7 118 514 (HICK) <br> -- | | X: particularly relevant <br> A: technological background <br> O: non-written disclosure <br> P: intermediate document <br> T: theory or principle underlying the invention <br> E: conflicting application <br> D: document cited in the application <br> L: citation for other reasons |
| P | DE - A - 2 718 033 (LUTZ) <br> * page 14, line 1 * <br> ---- | 5 | |

| | &: member of the same patent family, corresponding document |
|---|---|
| X The present search report has been drawn up for all claims | |

| Place of search | Date of completion of the search | Examiner |
|---|---|---|
| Berlin | 19-12-1978 | SIMON |

EPO Form 1503.1 06.78

16